# EUROPÄISCHE PATENTSCHRIFT

(11) **EP 0 687 125 B1**
(45) Veröffentlichungstag und Bekanntmachung des Hinweises auf die Patenterteilung: **09.09.1998**
(21) Anmeldenummer: 95810361.6
(22) Anmeldetag: 31.05.1995
(51) Int. Cl.: H04Q 11/04, H04L 12/56

(54) **Vorrichtung zum Ausgleich des Datenflusses**
Device for compensation of the dataflow
Dispositif pour compenser le débit de données

(30) Priorität: 08.06.1994 CH 1805/94
(43) Veröffentlichungstag der Anmeldung: 13.12.1995
(73) Patentinhaber: ALCATEL ALSTHOM COMPAGNIE GENERALE D'ELECTRICITE, 75008 Paris (FR)
(72) Erfinder: Hug, Werner, CH-8630 Rüti (CH)
(74) Vertreter: Schätzle, Albin, Dipl.-Phys.

(56) Entgegenhaltungen:
- INTERNATIONAL SWITCHING SYMPOSIUM 1992, 25.Oktober 1992, YOKOHAMA , JP, Seiten 285-289, XP000337660 N. MIYAHO ET AL.: "An ATM Switching System Architecture for First Generation of Broadband Services "
- PROCEEDINGS OF THE GLOBAL TELECOMMUNICATIONS CONFERENCE (GLOBECOM), HOUSTON, NOV. 29 - DEC. 2, 1993, Bd. 3 OF 4, 29.November 1993, INSTITUTE OF ELECTRICAL AND ELECTRONICS ENGINEERS, Seiten 1822-1826, XP000436124 VAMAN D R ET AL: "A FLOW CONTROL STRATEGY FOR ATM NETWORKS BASED ON A UNIFIED PERFORMANCE PARAMETER"
- COUNTDOWN TO THE NEW MILENNIUM, PHOENIX, DEC. 2 - 5, 1991, Bd. 3 OF 3, 2.Dezember 1991, INSTITUTE OF ELECTRICAL AND ELECTRONICS ENGINEERS, Seiten 2110-2116, XP000313768 YOUICHI SATO ET AL: "EXPERIMENTAL ATM TRANSPORT SYSTEM AND VIRTUAL PATH MANAGEMENT TECHNIQUES"

## Beschreibung

Die Erfindung liegt auf dem Gebiet der Steuerung des Datenflusses in Netzwerken der Breitbandkommunikation und betrifft eine Vorrichtung gemäss Oberbegriff des Patentanspruchs 1.

Netzwerke der Breitbandkommunikation ermöglichen mit dem asynchronen Uebermittlungsverfahren (Asynchronous Transfer Mode - ATM) gemäss einer CCITT-Empfehlung den Austausch von digitalen Daten verschiedenster Art. Eine - für kurze Zeit - etablierte logische Verbindung belegt einen sogenannten virtuellen Kanal. Der Datenfluss, das ist die Datenmenge, die pro Zeiteinheit über diesen Kanal läuft, ist abhängig von der Art der Kommunikation (Sprache, bewegte Echtzeitbilder, Dateienaustausch usw.) und belegt einen entsprechenden Anteil am insgesamt verfügbaren Datenfluss auf dem physischen Uebertragungsmedium. Zum Beispiel benötigt Sprachübermittlung gleichbleibend sehr wenige Dateneinheiten pro Zeiteinheit, wogegen ein Dateienaustausch bevorzugt viele Dateneinheiten pro Zeiteinheit verwendet, jedoch ohne besondere Anforderungen an den zeitlichen Ablauf. Der Datenfluss in einem virtuellen Kanal kann im zeitlichen Verlauf an- und abschwellen und ganz versiegen. Für manche Uebertragungsarten, wie etwa Videoübertragungen, ist der Datenfluss gut abschätzbar.

Auf dem Uebertragungsmedium wird die benötigte Kapazität pro virtuellem Kanal oder, bei mehreren über einen gewissen Netzabschnitt gemeinsam geschaltenen Kanälen, pro virtuellem Pfad, entsprechend einer Vereinbarung zur Verfügung gehalten. Wohl der wichtigste Parameter ist dabei die Anzahl der pro Zeiteinheit übertragbaren Dateneinheiten, die sogenannte Bitrate. Darüber hinaus kann die Vereinbarung zwischen Netzbetreiber und Kunden weitere Parameter betreffen, wie etwa eine kurze Zeit, während der sich eine gewisse Anzahl Dateneinheiten rascher folgen dürfen. Die Einhaltung derartiger Vereinbarungen an der Kunden-Netzwerkschnittstelle besorgt ein spezieller Schaltungsteil, die Benützungsparameterüberwachung, in der Fachsprache Usage Parameter Control, UPC, genannt. Häufig ist diese am Eingang einer ATM-Vermittlungseinheit angebracht. Bei Nichteinhalten der Vereinbarung verwirft die UPC überzählige Dateneinheiten.

Die in dieser Weise getroffenen Vereinbarungen verhindern zwar eine Ueberlastung, namentlich der Vermittlungseinheit, haben aber auch zur Folge, dass eventuell vorhandene Kapazität in den Verbindungen ungenutzt bleibt. Es ist deshalb beabsichtigt, auf den Breitbandnetzen einen Dienst anzubieten, der es erlaubt, die verfügbare Bitfolgefrequenz auszunützen. Ein Kunde, der diesen Dienst beansprucht, kann über die vereinbarte Kapazität hinaus, die ihm immer zur Verfügung steht, Datentransfers bis zur maximalen Belastung der Verbindung vornehmen - das Maximum kann durch eine weitere Vereinbarung oder durch die schaltungstechnisch höchstzulassige Bitrate bestimmt sein. Dieser Dienst ist besonders interessant für den nicht zeitkritischen Austausch von Daten.

Andererseits ergibt sich aus dieser Ausweitung der Verbindungs-Belastungen die Gefahr der Ueberlastung der Vermittlungseinheit. Eine Möglichkeit zur Minderung dieser Gefahr besteht darin, pro physisch vorhandene Verbindung einen Puffer vorzusehen, welcher den Datenfluss durch diese Verbindung insgesamt begrenzt. Dabei kann es aber geschehen, dass die Datenflüsse der Pfade, die über diese Verbindung laufen, relativ stark zurückgebunden werden, obwohl die Vermittlungseinheit noch lange nicht überlastet wäre. Ein anderes Vorgehen zur Vermeidung der Ueberlastung der Vermittlungseinheit besteht darin, eine Echtzeitmessung des Datenverkehrs in den Anschluss-Schaltungen der physischen Verbindungen und eine darauf basierende statistische Multiplexierung vorzunehmen, wie es im folgenden Dokument für eine Messung und Steuerung am Ausgangspuffer beschrieben ist: International Switching Symposium 1992, 25. Oktober 1992, Yokohama, JP, Seiten 285-289; N. Miyaho et al.: "An ATM Switching System Architecture for First Generation of Broadband Services". Auch dieses Vorgehen erlaubt es aber nicht, eine Optimierung des Verkehrs über mehrere physische Verbindungen hinweg vorzunehmen. Sein Ziel ist denn auch, für die betreffende Verbindung eine vereinbarte statistische Bandbreite einhalten, und nicht, die verfügbare Bitfolgefrequenz ausnützen zu können.

Es besteht daher die Aufgabe, eine Vorrichtung zu finden, welche es den an eine Vermittlungseinheit in einem Netzwerk angeschlossenen Kunden erlaubt, wenn immer möglich von der verfügbaren Bitfolgefrequenz Gebrauch zu machen, dabei jedoch sicherzustellen, dass die Vermittlungseinheit nicht überlastet wird.

Die gesuchte Vorrichtung ist durch die kennzeichnenden Merkmale des Patentanspruchs 1 charakterisiert. Ein der Vermittlungseinheit vorgelagertes Schaltnetz leitet alle virtuellen Pfade, welche den Dienst der verfügbaren Bitfolgefrequenz in Anspruch nehmen, auf einen Server. Dieser Server puffert alle ankommenden Daten und konzentriert sie, bevorzugt auf wenige physische Verbindungen mit hoher Bitrate, die auf weitere Eingänge der Vermittlungseinheit geführt sind. Diese Anordnung hat den Vorteil, einen Ausgleich unter den einzelnen Zuleitungen schaffen zu können. Eine bevorzugte Ausführungsform verwendet einen Server mit einem adressierbaren, allen umgeleiteten Verbindungen gemeinsamen Pufferspeicher. Mit diesem lassen sich individuell Prioritäten setzen.

Die vorhandene Benützungsparameterüberwachung soll weiterhin wirksam bleiben. Da der Server selber für eine Begrenzung des Datenflusses sorgt, genügt eine dem Schaltnetz vorgelagerte Ueberwachung; virtuelle Kanäle in Pfaden, für die der Dienst der Ausnützung der verfügbaren Bitfolgefrequenz vereinbart ist, und deren Datenfluss unterhalb des Maximums liegt, werden durchgelassen, die übrigen Kanäle werden laufend gemäss den Vereinbarungen überprüft und nötigenfalls werden Dateneinheiten abgewiesen. Eine andere Anordnung verwendet die meist am Eingang der Vermittlungseinheit vorhandene Benützungsparameterüberwachung. Diese überwacht jedoch nur die Vereinbarungen ohne den Dienst der Ausnützung der verfügbaren Bitfolgefrequenz - andere Datenflüsse stehen an diesen Eingängen ja auch nicht an. Die Kontrolle auf das vereinbarte Maximum der zulässigen Bitfolgefrequenz erfolgt bei dieser Anordnung deshalb in einer vereinfachten UPC zwischen Schaltnetz und Server.

Eine daraus abgeleitete Ausführungsform sieht vor, an den Eingängen der beiden Benützungsparameterüberwachungen eine Diskriminierung der Dateneinheiten daraufhin vorzunehmen, ob sie den Dienst zur Ausnützung der verfügbaren Bitfolgefrequenz in Anspruch nehmen oder nicht. Die der Vermittlungseinheit vorgelagerte Benützungsparameterüberwachung scheidet jene aus, die dem Server vorgelagerte lässt nur jene durch. Diese Anordnung hat den grossen Vorteil, dass sich das Schaltnetz auf eine simple Abzweigung für jede physische Verbindung reduziert. Sie ist deshalb insbesondere für optische Anschlüsse gut geeignet.

Nachfolgend ist die Erfindung anhand der Figuren 1 bis 4 eingehender beschrieben. Es zeigen:
- Figur 1: Prinzipieller Aufbau eines Puffers für den Ausgleich des Datenflusses auf einer Verbindung;
- Figur 2: Prinzipieller Aufbau des Servers;
- Figur 3: Schema der Vorrichtung zum Ausgleich des Datenflusses, und
- Figur 4: Schema der Vorrichtung zum Ausgleich des Datenflusses in einer bevorzugten Variante.

Eine physische Verbindung zwischen einer Netzwerk-Kunden-Schnittstelle und der Vermittlungseinheit transportiert Dateneinheiten auf mehreren virtuellen Pfaden, die ihrerseits mehrere virtuelle Kanäle enthalten. Gemäss getroffener Vereinbarung kann auf jedem dieser Kanäle bzw. Pfade ein bestimmter Datenfluss transportiert werden. Der Kunde wird nur in seltenen Zeitabschnitten gleichzeitig alle Verbindungen auslasten. Die physische Verbindung wird daher fast ständig freie Transportkapazität aufweisen.
Andererseits ist es für den Kunden wünschbar, ab und zu in kurzer Zeit eine grössere Datenmenge transportieren zu können. Zur Deckung dieses Bedarfs soll ihm die freie Transportkapazität der Verbindung zur Verfügung gestellt werden. Eine erweiterte Vereinbarung sieht also vor, dass der Datenfluss bis zu einem Maximum - gegeben durch die höchstzulässige Bitfolgefrequenz der phyischen Verbindung oder durch Vereinbarung - erhöht werden darf. Für den Netzbetreiber ergibt sich aber die Notwendigkeit, die Datenmenge an der Vermittlungseinheit in Schranken zu halten, damit diese nicht überlastet wird.

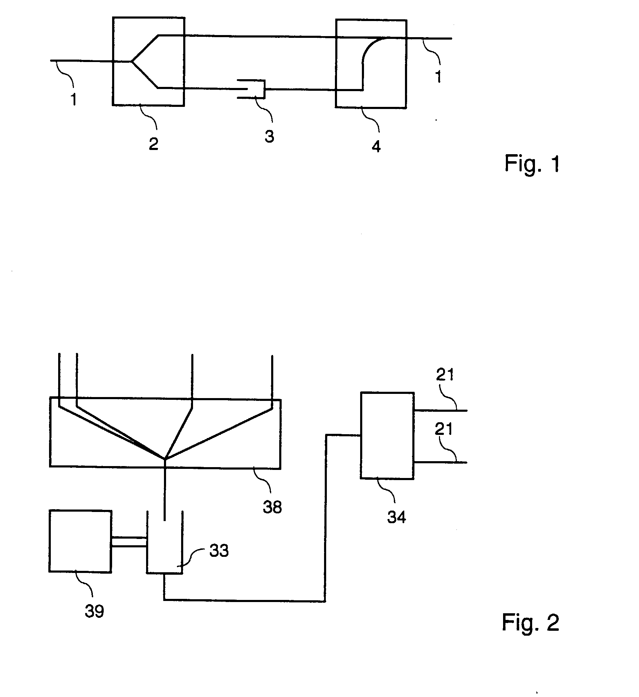

Eine Möglichkeit zur Beschränkung des Datenanfalls besteht darin, auf einer Verbindung kurzfristig die volle Kapazität auszunützen, mittelfristig jedoch nur eine submaximale Auslastung zuzulassen, so dass über alle Eingänge an der Vermittlungseinheit gesehen die Gesamtbelastung letzterer nicht überschritten werden kann. Eine Beschränkung dieser Art kann mit Hilfe eines Puffers erfolgen, welche den in der Figur 1 angegebenen prinzipiellen Aufbau hat. Die Daten auf der physischen Verbindung 1, die zu einem virtuellen Kanal gehören, dessen Daten vereinbarungsgemäss sofort transportiert werden, werden von der Datenweiche 2 direkt an den Ausgang geleitet, wo sie in die Fortsetzung der physischen Verbindung 1 gelangen. Die übrigen Daten werden von der Datenweiche 2 in einen Datenspeicher 3 geleitet. Die Dateneinmundung 4 besorgt die Auslesung des Speichers, wenn immer die Möglichkeit besteht, Dateneinheiten in den an jener Stelle privilegierten Datenfluss einzufügen.

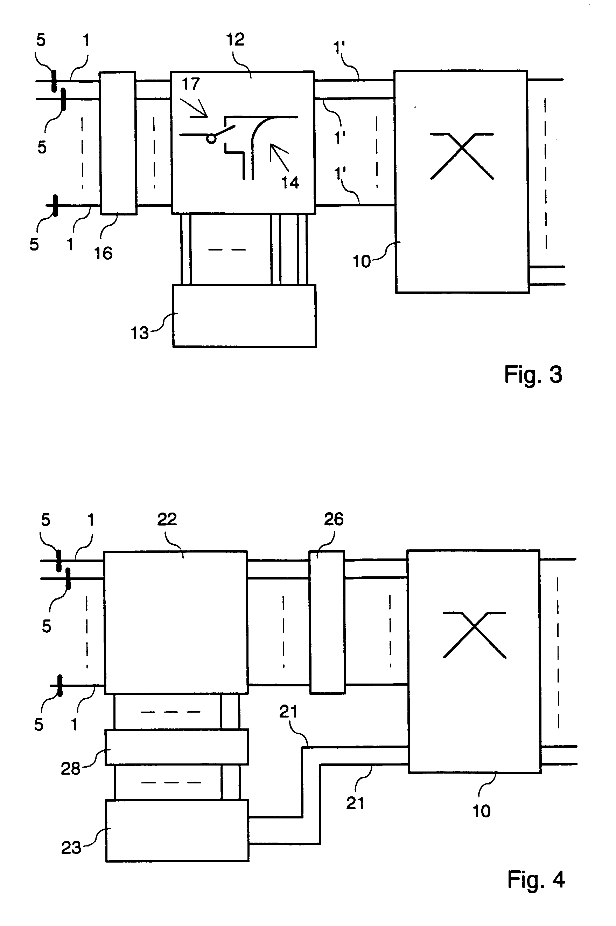

Die oben geschilderte Möglichkeit erlaubt keinen Ausgleich der Datenflüsse über mehrere physische Verbindungen hinweg, was anzustreben ist, will man die vorhandenen Kapazitäten bestmöglich nützen, ohne die Vermittlungseinheit zu überlasten. Erfindungsgemäss wird daher vorgesehen, zwischen den Netzwerk-Benützer-Schnittstellen und der Vermittlungseinheit ein Schaltnetz anzuordnen und die Zwischenspeicherung der nicht prioritären Dateneinheiten in einem Server gemeinsam vorzunehmen. Die Figur 3 zeigt schematisch die Anordnung der erfindungsgemässen Vorrichtung. In die Vielzahl der physischen Verbindungen 1 zwischen den Netzwerk-Benützer-Schnittstellen 5 und der Vermittlungseinheit 10 ist ein Schaltnetz 12 eingebaut. Diesem vorgelagert gezeichnet ist die Benützungsparameterüberwachung 16, die auch als Schaltungseinheit mit dem Schaltnetz 12 ausgeführt sein kann. An das Schaltnetz 12 ist der Server 13 angekoppelt. Die Funktion des Schaltnetzes 12 ist symbolisch durch einen Umschalter 17 und - in der vorliegenden Variante - eine Dateneinmündung 14 dargestellt. Ein Signal auf einer physischen Leitung 1 wird am Eingang der Benützungsparameterüberwachung 16 in einen Datenstrom gewandelt und nachfolgend kontrolliert. Ausserhalb der Vereinbarung verkehrende Daten werden ausgeschieden. Virtuelle Pfade, für welche der Dienst zur Ausnützung der verfügbaren Bitfolgefrequenz vereinbart ist, werden durchgelassen, jedoch im Schaltnetz 12 an den Server 13 umgeleitet, das heisst, für diese Pfade steht der Umschalter 17 symbolisch gesehen in der unteren Stellung. Die vom Server 13 nach der notwendigen Pufferung ausgegebenen Daten fliessen über die Dateneinmündung 14 in die physische Verbindung 1' zurück.

In der beschriebenen Variante wird das Schaltnetz auch dazu benützt, abgezweigte Daten nach der Pufferung über die bei anderer Stellung des Schalters 17 vorhandenen Direktverbindungen zurück in die physischen Verbindungen 1' einzuschlaufen. Dies ist allerdings nicht nötig. Vielmehr können die gepufferten Daten, die ja nach wie vor alle Leitinformationen enthalten, direkt auf einen oder mehrere Eingänge der Vermittlungseinheit geführt werden. Eine derartige Ausführung bedingt zwar mehr Eingänge am ATM-Switch, vereinfacht aber den Schaltungsaufwand für das Schaltnetz erheblich. Die Vermittlungseinheit wird durch die zusätzlichen Eingänge nicht stärker belastet, fliessen doch die Daten nur entweder über die direkten Verbindungen oder über die zusätzlichen Eingänge.

Die Figur 4 zeigt eine Anordnung der eben geschilderten Art. Wiederum ist in die Vielzahl der physischen Verbindungen 1 zwischen den Netzwerk-Benützer-Schnittstellen 5 und der Vermittlungseinheit 10 ein Schaltnetz 22 eingebaut. Dieses nimmt aber nur noch die Umschaltung der Pfade vor, für die der Dienst zur Ausnützung der verfügbaren Bitfolgefrequenz vereinbart wurde. Eine Dateneinmündung 14 entfällt. Stattdessen sind die Ausgänge des Servers 23 über physische Verbindungen 21 mit hoher Bitfolgefrequenz direkt an die Vermittlungseinheit 10 geführt. Handelt es sich bei den physischen Verbindungen 1 beispielsweise um mehrere Leitungen mit einer zulässigen Bitfolgefrequenz von 34 Mbit/s und welche mit 155 Mbit/s, so können je nach Anzahl der Verbindungen 1 zwei Verbindungen 21 mit je 622 Mbit/s durchaus genügen.

Da eine Verbindung nicht einfach unterbrochen sein darf, muss im Fall, wo der Schalter 17 den Datenfluss an den Server umleitet, der Anschluss an die Vermittlungseinheit korrekt überbrückt werden. Dies kann durch einen Leerzellengenerator geschehen, der mit Betätigen des Schalters 17 an den genannten Anschluss gelegt wird.

Weiter zeigt die Figur 4 eine andere Anordnung der Benützungsparameterüberwachung. Sie trägt dem Umstand Rechnung, dass die UPC als Teil der Vermittlungseinheit 10 realisiert sein kann. Da an den zur Vermittlungseinheit 10 hin gerichteten Ausgängen des Schaltnetzes 22 nur Daten anstehen, für die der Dienst zur Ausnützung der verfügbaren Bitfolgefrequenz nicht vereinbart ist, ergibt sich für die Benützungsparameterüberwachung 26, wie sie in der Figur 4 gezeichnet ist, keine Aenderung gegenüber dem Betrieb ohne den genannten Dienst. Damit jedoch auch die Einhaltung der Vereinbarungen bezüglich der Ausnützung der verfügbaren Bitfolgefrequenz überwacht werden kann, wird eine weitere, vereinfachte Benützungsparameterüberwachung 28 benötigt, die mit Vorteil zwischen dem Schaltnetz 22 und dem Server 23 eingefügt wird, so dass nur die umgeleiteten Datenströme überwacht werden. Auch hier ist eine Schaltungseinheit zwischen Benützungsparameterüberwachung 28 und Schaltnetz 22 oder/und Server 23 durchaus möglich.

Die eben geschilderte Anordnung ist bezüglich des Schaltnetzes dann besonders einfach, wenn die Wandlung der Signale auf den physischen Verbindungen 1 in die Datenflüsse an den Eingängen der beiden Benützungsparamterüberwachungen 26, 28 erfolgt und diese selbst die Dateneinheiten danach diskriminieren, ob sie dem Dienst zur Ausnützung der verfügbaren Bitfolgefrequenz unterliegen oder nicht. Das Schaltnetz besteht dann nur noch aus je einer Verzweigung jeder eingehenden physischen Verbindung. Im Fall elektrischer Verbindungen genügt dafür die Abzweigung einer leitenden Verbindung. Im Fall optischer Verbindungen (Lichtwellenleiter) besorgt ein sogenannter Splitter das Auskoppeln des optischen Signals. Nach dem Umsetzen des Signals in den Strom von Dateneinheiten am Eingang der der Vermittlungseinheit 10 vorgelagerten Benützerparameterüberwachung 26 überprüft diese zunächst jede Dateneinheit einzeln darauf, ob sie zu Daten gehört, die den Dienst zur Ausnützung der verfügbaren Bitfolgefrequenz in Anspruch nimmt - die Information zur Diskriminierung ist im Kopf der Dateneinheit vorhanden. Falls ja, verwirft sie die Dateneinheit, falls nein leitet sie sie weiter und unterzieht sie den weiteren Tests der Benützerparameterüberwachung. Die dem Server 23 vorgelagerte Benützerparameterüberwachung 28 setzt an ihrem erweiterten Eingang ebenfalls das auf der abgezweigten physischen Verbindung ankommende Signal in den Strom von Dateneinheiten um und überprüft jede Dateneinheit einzeln, scheidet jedoch jene Dateneinheiten aus, die nicht den Dienst zur Ausnützung der verfügbaren Bitfolgefrequenz beanspruchen.

Die Figur 2 zeigt die wesentlichen Teile des Servers. Die an den Eingängen anstehenden Daten gelangen an einen Konzentrator 38, der sie an einen Pufferspeicher 33 weiterleitet. Das Verwalten und Auslesen dieses Speichers bedingt eine spezielle Serverlogik 39. Die ausgelesenen Dateneinheiten werden durch die Ausgabeeinheit 34 an die physischen Ausgänge 21 geleitet. Im Falle des Servers 13 gemäss der Anordnung nach Figur 3 übernimmt die Ausgabeeinheit 34 die Auftrennung des Datenstroms auf die verschiedenen Ausgangsleitungen; dies benötigt eine Vielzahl von Dateneinmündungen ananlog den Dateneinmündungen 4 im Schaltnetz 12.

Bevorzugt wird ein adressierbarer Pufferspeicher 33 verwendet. Mit diesem ist es möglich, die Dateneinheiten nach ausgewählten Ordnungskriterien zu verwalten und auszulesen. Ein Beispiel möge den Vorteil dieser Ausgestaltung beleuchten: Der Dienst zur Ausnützung der verfügbaren Bitfolgefrequenz wird gleichzeitig auf zwei virtuellen Pfaden für die Uebertragung einer Reihe von stehenden Bildern benützt. Die Pfade laufen über zwei verschiedene physische Verbindungen. Die erste weist eine Bitfolgefrequenz von 155 Mbit/s auf, die zweite eine solche von 34 Mbit/s und ist, im Gegensatz zur ersten, durch den prioritäten Verkehr bereits stark ausgelastet. Ueber die erste Verbindung gelangen deshalb pro Zeiteinheit ungleich viel mehr Dateneinheiten in den Speicher als über die zweite. Ohne die Verwaltung mit dem adressierbaren Pufferspeicher werden die Daten in der Reihenfolge ihres Eintreffens als gleichmässiger Fluss ausgelesen, aber langsamer als sie eingetroffen sind. Der Transport eines einzigen Bildes über die zweite Verbindung dauert so lange wie der Transport der ungleich viel grösseren Zahl von Bildern über die erste Verbindung. Dieses verschmieren der Dateneinheiten lässt sich durch eine geeignete Adressierung und Verwaltung des Pufferspeichers vermeiden.

Naturgemäss ist der Pufferspeicher 33 endlich. Ein überlaufen lässt sich - abgesehen vom unerwünschten Abweisen von Dateneinheiten - nur vermeiden, wenn die Datenquellen, das sind die Kunden-Schnittstellen 5, angewiesen werden, den Datenfluss zu drosseln. Diese Rückmeldung, die nach eigenständigen Protokollen abläuft, gehört zum Dienst zur Ausnützung der verfügbaren Bitfolgefrequenz. Die notwendigen Signale stammen aus der Serverlogik 39. Insbesondere bei der Ausführungsform mit optischen Abzweigungen im Schaltnetz ist eine direkte Rückmeldung über die eingehende Leitung nicht möglich. Sie kann aber über einen der Ausgänge des Servers an die Vermittlungseinheit 10 erfolgen, über die sie zurück an die Schnittstelle 5 gelangt.

## Patentansprüche

1. Vorrichtung zum Ausgleich des Datenflusses zwischen Netzwerkschnittstellen und einer Vermittlungseinheit in Breitbandnetzen mit einer Benützungsparameterüberwachung und einem Dienst zur Ausnützung der verfügbaren Bitfolgefrequenz, dadurch gekennzeichnet, dass der Vermittlungseinheit (10) ein Schaltnetz (12,22) vorgeschaltet ist, das Verbindungen, die den Dienst zur Ausnützung der verfügbaren Bitfolgefrequenz beanspruchen, über einen an das Schaltnetz (12,22) angeschlossenen Server (13,23), der alle ankommenden Daten puffert, umleitet.

2. Vorrichtung nach Anspruch 1, dadurch gekennzeichnet, dass der Server (13,23) einen adressierbaren, allen umgeleiteten Verbindungen gemeinsamen Pufferspeicher (33) aufweist.

3. Vorrichtung nach Anspruch 1, dadurch gekennzeichnet, dass die über den Server (23) umgeleiteten Verbindungen auf wenige physische Verbindungen mit hoher Bitrate (21) konzentriert direkt auf weitere Eingänge der Vermittlungseinheit geführt sind.

4. Vorrichtung nach Anspruch 1, dadurch gekennzeichnet, dass die Benützungsparameterüberwachung (16) für den gesamten Datenfluss dem Schaltnetz (12) vorgelagert ist.

5. Vorrichtung nach Anspruch 3, dadurch gekennzeichnet, dass die Benützungsparameterüberwachung (26) für den Datenfluss ohne den Dienst zur Ausnützung der verfügbaren Bitfolgefrequenz zwischen das Schaltnetz (22) und die Vermittlungseinheit (10) geschaltet ist, und eine weitere Benützungsparameterüberwachung (28) für den Datenfluss mit dem Dienst zur Ausnützung der verfügbaren Bitfolgefrequenz zwischen das Schaltnetz (22) und den Server (23) geschaltet ist.

6. Vorrichtung nach Anspruch 5, dadurch gekennzeichnet, dass das Schaltnetz lediglich aus einer Verzweigung für jede physische Verbindung (1) besteht und die beiden Benützungsparameterüberwachungen (26,28) je ein Filter enthalten, wobei die Benützungsparameterüberwachung (26) zwischen dem Schaltnetz und der Vermittlungseinheit (10) den Datenfluss des Dienstes zur Ausnützung der verfügbaren Bitfolgefrequenz wegfiltert und die Benützungsparameterüberwachung (28) zwischen dem Schaltnetz und dem Server (23) nur den Datenfluss des Dienstes zur Ausnützung der verfügbaren Bitfolgefrequenz passieren lässt und den Rest wegfiltert.

7. Vorrichtung nach Anspruch 1, dadurch gekennzeichnet, dass das Schaltnetz (12,22) mindestens einen Leerzellengenerator enthält, der beim Umleiten einer Verbindung den Datenfluss auf der ursprünglichen Verbindung aufrechterhält.

## Claims

1. A device for balancing the data flow between network interfaces and a switching unit in broad-band networks with usage parameter control and a service for utilizing the available bit rate, characterized in that a switching array (12, 22) is connected before the switching unit (10) and reroutes connections that use the service for utilizing the available bit rate via a server (13, 23) which is connected to the switching array (12, 22) and buffers all incoming data.

2. A device as claimed in claim 1, characterized in that the server (13, 23) is provided with an addressable buffer memory (33) which is common to all rerouted connections.

3. A device as claimed in claim 1, characterized in that the connections which are rerouted via the server (23) are conducted in a concentrated manner in few physical connections with a high bit rate (21) directly to further inputs of the switching unit.

4. A device as claimed in claim 1, characterized in that the usage parameter control (16) for the entire data flow is located upstream of the switching array (12).

5. A device as claimed in claim 3, characterized in that the usage parameter control (26) for the data flow without the service for utilizing the available bit rate is connected between the switching array (12) and the switching unit (10), and that a further usage parameter control (28) for the data flow with the service for utilizing the available bit rate is connected between the switching array (22) and the server (23).

6. A device as claimed in claim 5, characterized in that the switching array only comprises a branch for each physical connection (1) and each or the two usage parameter controls (26, 28) contains a filter, where the usage parameter control (26) between the switching array and the switching unit (10) filters out the data flow of the service for utilizing the available bit rate, and the usage parameter control (28) between the switching array and the server (23) only allows the data flow of the service for utilizing the available bit rate to pass, and filters out the rest.

7. A device as claimed in claim 1, characterized in that the switching array (12, 22) contains at least one idle cell generator which maintains the data flow in the original connection during the rerouting of a connection.

## Revendications

1. Dispositif pour équilibrer le flux de données entre des interfaces de réseau et une unité de commutation dans des réseaux à large bande avec un contrôle des paramètres d'utilisation et un service pour l'utilisation du débit binaire disponible, caractérisé en ce que l'unité de commutation (10) est précédée d'un réseau de commutation (12, 22), qui dévie les communications, qui sollicitent le service pour l'utilisation du débit binaire disponible, par l'intermédiaire d'un serveur (13, 23) qui est raccordé au réseau de commutation (12, 22) et met toutes les données arrivant dans une mémoire tampon.

2. Dispositif selon la revendication 1, caractérisé en ce que le serveur (13, 23) présente une mémoire tampon (33) adressable et commune à toutes les communications déviées.

3. Dispositif selon la revendication 1, caractérisé en ce que les communications déviées par le serveur (23), à l'exception de quelques liaisons physiques avec un débit binaire (21) élevé, sont concentrées et guidées directement sur d'autres entrées de l'unité de commutation.

4. Dispositif selon la revendication 1, caractérisé en ce que le contrôle des paramètres d'utilisation (16) pour l'ensemble du flux de données est placé en amont du réseau de commutation (12).

5. Dispositif selon la revendication 3, caractérisé en ce que le contrôle des paramètres d'utilisation (26) pour le flux de données sans le service pour l'utilisation du débit binaire disponible est commuté entre le réseau de commutation (22) et l'unité de commutation (10), et un autre contrôle des paramètres d'utilisation (28) pour le flux de données avec le service pour l'utilisation du débit binaire disponible est commuté entre le réseau de commutation (22) et le serveur (23).

6. Dispositif selon la revendication 5, caractérisé en ce que le réseau de commutation comprend seulement une dérivation pour chaque liaison (1) physique et les deux contrôles des paramètres d'utilisation (26, 28) contiennent chacun un filtre, le contrôle des paramètres d'utilisation (26) entre le réseau de commutation et l'unité de commutation (10) éliminant par filtrage le flux des données du service pour l'utilisation du débit binaire disponible et le contrôle des paramètres d'utilisation (28) entre le réseau de commutation et le serveur (23) ne laissant passer que le flux des données du service pour l'utilisation du débit binaire disponible et éliminant le reste par filtrage.

7. Dispositif selon la revendication 1, caractérisé en ce que le réseau de commutation (12, 22) contient au moins un générateur de cellules vides, qui maintient le flux de données sur la communication d'origine lors de la déviation d'une communication.
